# EUROPÄISCHE PATENTSCHRIFT

(11) **EP 3 539 910 B1**
(45) Veröffentlichungstag und Bekanntmachung des Hinweises auf die Patenterteilung: **03.05.2023**
(21) Anmeldenummer: 19162450.1
(22) Anmeldetag: 13.03.2019
(51) Int. Cl.: B65G 47/26, B65G 47/31, B65G 47/22, B65B 35/44, B65G 47/71

(54) **FÖRDERBANDSYSTEM ZUM BILDEN EINER VORBESTIMMTEN ANORDNUNG VON PRODUKTEN**
CONVEYOR BELT SYSTEM TO BUILD A PREDEFINED ARRANGEMENT OF PRODUCTS
SYSTÈME DE BANDE TRANSPORTEUSE POUR METTRE EN PLACE DES PRODUITS DANS UN AGENCEMENT PRÉDÉFINI

(30) Priorität: 16.03.2018 DE 102018204031
(43) Veröffentlichungstag der Anmeldung: 18.09.2019
(73) Patentinhaber: MULTIVAC Sepp Haggenmüller SE & Co. KG, 87787 Wolfertschwenden (DE)
(72) Erfinder: ACHENBACH, Manfred, 35216 Biedenkopf (DE); WÖRZ, Norbert, 87746 Erkheim (DE); MÖßNANG, Konrad, 87439 Kempten (DE); MAIER, Robert, 87727 Babenhausen (DE)
(74) Vertreter: Grünecker Patent- und Rechtsanwälte PartG mbB

(56) Entgegenhaltungen:
- EP-A1- 2 030 898
- DE-A1-102010 053 872
- GB-A- 2 098 955

## Beschreibung

Die vorliegende Erfindung bezieht sich auf ein Förderbandsystem gemäß dem Anspruch 1.

In der Praxis sind Beladelinien bekannt, bei denen Produkte, wie beispielsweise geschindelt geschnittene Wurst oder Käse, in bereitgestellte Formmulden an einer Tiefziehverpackungsmaschine eingelegt werden. Dabei werden die Produkte von einem Slicer an ein Zuführbandsystem übergeben, worauf die Produkte entlang einer Transportstrecke auf mehreren hintereinander in Transportrichtung angeordneten Transportbandsegmenten hin zu einer Einlegestation der Tiefziehverpackungsmaschine transportiert werden.

Aus der Praxis ist bekannt, dass die von dem Slicer kontinuierlich zur Verfügung gestellten Produkte zunächst mittels eines zum Zuführbandsystem gehörigen Verteilerbands auf Transportspuren verteilt werden. Gleich im Anschluss daran werden mehrere Produkte auf einem dem Verteilerband nachgeordneten Transportband gemäß einer quer zur Transportrichtung angeordneten Produktreihe ausgerichtet. Die quer zur Transportrichtung ausgerichteten Produktreihen werden dann über mehrere hintereinander positionierte Pufferbänder transportiert und weiter stromabwärts an einer Einlegestation der Tiefziehverpackungsmaschine in die jeweiligen dort zur Verfügung gestellten Verpackungsmulden eingelegt.

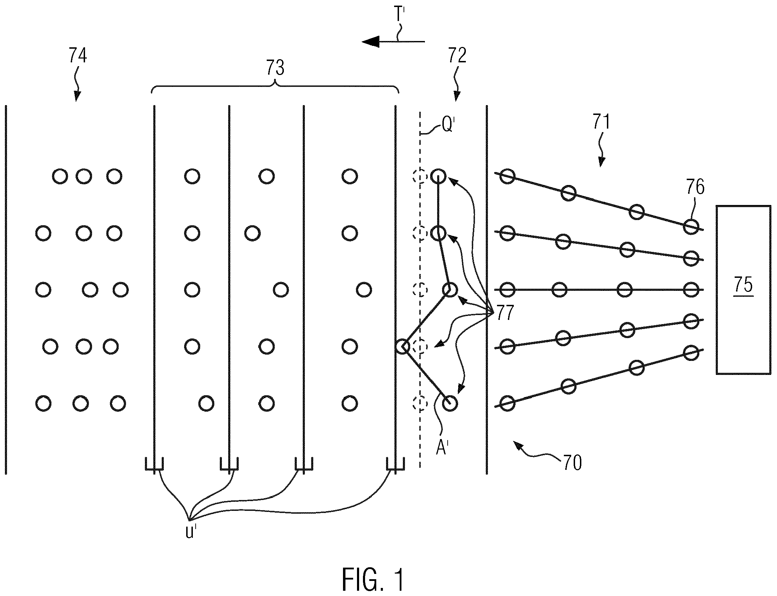

Für den bekannten Transportvorgang umfasst das herkömmliche Zuführbandsystem der Reihe nach in Transportrichtung, ausgehend vom Slicer bis hin zur Einlegestation der Tiefziehverpackungsmaschine, die folgende Transportbandanordnung: Verteilerband, Ausrichtband, Pufferbänder und Einlegeband. Eine solche Anordnung wird schematisch in der Figur 1 dargestellt.

Bei der bekannten Anordnung muss das Ausrichtband möglichst kurz ausgebildet sein, da ihm vom weiter stromaufwärts positionierten Slicer über das Verteilerband kontinuierlich Produkte geliefert werden. Um der vom Slicer produzierten Produktmenge nachzukommen, wird daher immer nur eine Querreihe von Produkten auf dem Ausrichtband hergestellt. Da das bekannte, gleich in Transportrichtung hinter dem Verteilerband angeordnete Ausrichtband zum Herstellen einer Querreihe aus darauf ankommenden Produkten mehrere in Transportrichtung nebeneinander angeordnete, separat ansteuerbare, kurz gebaute Ausrichtbänder aufweist, ist das Ausrichtband konstruktiv schwer herstellbar. Außerdem lassen sich dadurch mehrere Produkte nur in eng angeordneten Ausgangsformationen auf dem Ausrichtbandmodul aufnehmen.

Als wesentlicher Nachteil hat sich herausgestellt, dass die vom Ausrichtband einmal präzise in Querreihen ausgerichteten Produkte im Anschluss noch mehrere Pufferbänder überqueren müssen, bevor sie an der Einlegestation ankommen. Beim Überqueren der in Transportrichtung hintereinander angeordneten Pufferbänder, insbesondere beim Überqueren der jeweiligen dazwischenliegenden Übergabespalte und erst recht bei großen Geschwindigkeitsänderungen, kann es aber sein, dass die vom Ausrichtband zunächst präzise in Querreihen angerordneten Produkte gewissermaßen wieder verrutschen, d.h. ihre vorab präzise ausgerichtete Position wieder verändern. Ein der Pufferbandstrecke anschließender Einlegevorgang gemäß einer vorbestimmten Produktanordnung in die an der Tiefziehverpackungsmaschine zur Verfügung gestellten Verpackungsmulden ist dann nicht präzise möglich.

DE 10 2010 053 872 A1 offenbart eine Verpackungsanlage mit einer Produktzuführung und einer Verpackungsmaschine, die in Form einer Tiefziehverpackungsmaschine ausgebildet ist, wobei Transportbänder der Produktzuführung im Bereich einer Einlegestation der Tiefziehverpackungsmaschine Produkte in bereitgestellte Tiefziehmulden einlegen.

EP 2 030 898 A1 offenbart ein Förderbandsystem mit Gruppierbändern, die im Anschluss an eine Pufferbandzone angeordnet sind, um darauf positioniertes Transportgut in einer Produktgruppe quer zur Transportrichtung auszurichten, bevor die ausgerichteten Produkte an ein nachgelagertes Formatband und anschließend an ein weiter nachgelagertes Einlegeband übergeben werden.

EP 2 030 898 A1 offenbart ein Förderbandsystem nach dem Oberbegriff des Anspruchs 1 und ein Verfahren zum Bilden einer vorbestimmten Anordnung aus einzelnen oder in jeweiligen Gruppen zur Verfügung gestellten Produkten, wobei die Produkte gemäß der vorbestimmten Anordnung für einen Einlegevorgang an einer Verpackungsmaschine bestimmt sind, wobei gemäß der vorbestimmten Anordnung mehrere Produkte in einer Reihe quer zur Transportrichtung ausgerichtet werden, dabei werden die Produkte in nacheinander folgenden Transportabschnitten wie folgt bewegt:
- entlang eines ersten Transportabschnitts werden die Produkte auf mehrere in Transportrichtung verlaufende, vorbestimmte Spuren verteilt,
- entlang eines zweiten Transportabschnitts werden die jeweiligen für eine quer zur Transportrichtung ausgerichtete Reihe der vorbestimmten Anordnung vorgesehenen Produkte in mehreren vornehmlich gleichartig in Transportrichtung hintereinander angeordneten Ausgangsformationen transportiert, und
- entlang eines dritten Transportabschnitts werden die jeweiligen für eine quer zur Transportrichtung ausgerichtete Reihe der vorbestimmten Anordnung vorgesehenen gemäß der vorgenannten Ausgangsformation vorliegenden Produkte relativ zueinander derart beschleunigt, dass die jeweiligen Produkte in mindestens einer quer zur Transportrichtung ausgerichteten Reihe entsprechend der vorbestimmten Anordnung positioniert werden.

GB 2 098 955 A1 offenbart ein Transportsystem für Ziegelsteine, die entlang einer Transportstrecke vereinzelt, ausgerichtet und an ein Abführband übergeben werden.

Vor diesem Hintergrund liegt der Erfindung die Aufgabe zugrunde, ein Förderbandsystem sowie ein dementsprechendes Verfahren für eine präzise Transportgutübergabe in bereitgestellte Verpackungsmulden zur Verfügung zu stellen.

Diese Aufgabe wird gelöst mittels eines Förderbandsystems gemäß dem Anspruch 1 sowie mittels eines Verfahrens gemäß dem unabhängigen Anspruch 13.

Vorteilhafte Weiterbildungen der Erfindung sind in den Unteransprüchen angegeben.

Die Erfindung bezieht sich auf ein Förderbandsystem, das zum Bilden einer vorbestimmten Anordnung aus mehreren einzelnen oder in jeweiligen Gruppen ihm zur Verfügung gestellten Produkten konfiguriert ist, wobei die Produkte gemäß der vorbestimmten Anordnung für einen Einlegevorgang an einer Verpackungsmaschine bestimmt sind.

Mittels des erfindungsgemäßen Förderbandsystems sind jeweils mehrere Produkte in einer Reihe quer zur Transportrichtung ausrichtbar und gemäß dieser Anordnung präzise dem Einlegevorgang zuführbar.

Das erfindungsgemäße Förderbandsystem umfasst ein Verteilerbandmodul, womit Produkte von einem stromaufwärts positionierten Produktbereitsteller aufnehmbar sind, ein stromabwärts des Verteilerbandmoduls angeordnetes Pufferbandmodul, das dazu konfiguriert ist, in mehreren entlang der Transportrichtung nebeneinander verlaufenden Spuren jeweils mehrere Produkte hintereinander zu transportieren, sowie ein Ausrichtbandmodul, das dazu ansteuerbar ist, die ihm übergebenen Produkte in mindestens einer Reihe quer zur Transportrichtung gemäß der vorbestimmten Anordnung zu positionieren.

Erfindungsgemäß ist das Ausrichtbandmodul in Transportrichtung weiter stromabwärts positioniert als das Pufferbandmodul. Dadurch ergeben sich gleich mehrere positive technische Effekte.

Einerseits hat dies den positiven Effekt, dass das dem Pufferbandmodul in Transportrichtung nachgeordnete Ausrichtbandmodul mehr Zeit dafür hat, die ihm zur Verfügung gestellten Produkte entsprechend der vorbestimmten Anordnung, d.h. in einem gewünschten Format, beispielsweise einer Querreihe, auszurichten, da zunächst das Puffern der Produkte auf dem stromaufwärts positionierten Pufferbandmodul stattfindet. Damit zusammenhängend besteht außerdem die Möglichkeit, das Ausrichtbandmodul vielseitiger zu konstruieren, d.h. von der Beschränkung einer kurzen Ausbildung, wie dies bei der bekannten Lösung der Fall ist, wegzukommen. Deswegen bietet die erfindungsgemäße Anordnung den Vorteil, dass das Ausrichtbandmodul auch derart gebaut werden kann, dass es nicht nur eine Reihe, sondern gleich mehrere Reihen von Produkten präzise hintereinander ausrichten kann.

Andererseits bewirkt die im Vergleich zum Stand der Technik in Transportrichtung nach hinten verlagerte, d.h. erst im Anschluss an die Produktpufferbandzone durchgeführte, präzise Formatbildung auf dem Ausrichtbandmodul den Vorteil, dass die darauf gemäß der vorbestimmten Anordnung ausgerichteten Produkte präziser in die für sie im Anschluss zur Verfügung gestellten Verpackungsmulden eingelegt werden können, weil sie nach dem Ausrichten stromabwärts des Ausrichtbandmoduls, wenn überhaupt, nur noch wenige Bandübergänge zu überqueren haben bevor der Einlegevorgang stattfindet.

Vorzugsweise weist das Pufferbandmodul mehrere in Transportrichtung hintereinander angeordnete, separat ansteuerbare Pufferbandabschnitte auf, wobei benachbarte Pufferbandabschnitte durch einen Übergabespalt voneinander getrennt sind. Mittels der mehreren hintereinander angeordneten Pufferbandabschnitte lassen sich die daran vom stromaufwärts positionierten Verteilerbandmodul aufgenommenen Produkte entlang der Pufferbandstrecke derart ansammeln, dass sie vom Pufferbandmodul dem weiter stromabwärts positionierten Ausrichtbandmodul kontinuierlich zuführbar sind. Das Pufferbandmodul bildet daher einen zuverlässigen Zwischenspeicher, aus dem kontinuierlich Produkte an das weiter stromabwärts positionierte Ausrichtbandmodul übergeben werden können, sodass der Ausrichtvorgang im Wesentlichen unabhängig von der stromaufwärts ablaufenden Produktbereitstellung mittels des Produktbereitstellers, beispielsweise einem Slicer, sowie der daran anschließend stattfindenden Produktverteilung mittels des Verteilerbandmoduls gleichmäßig ablaufen kann. Demzufolge können die zunächst verteilten, dann gepufferten und erst im Anschluss daran präzise ausgerichteten Produkte auch zuverlässig in einer vorbestimmten Formatvorgabe den zur Verfügung gestellten Verpackungsmulden zuführt werden.

Eine Variante sieht vor, dass die für eine Reihe gemäß der vorbestimmten Anordnung bestimmten Produkte zunächst gemäß einer in horizontaler Projektionsebene angeordneten Ausgangsformation, ggf. teils unregelmäßig, vom Pufferbandmodul an das Ausrichtbandmodul übergeben werden. Gemäß dieser Variante wird entlang des Pufferbandmoduls in Kauf genommen, dass die darauf ankommenden und entlang der Pufferbandtransportstrecke weitertransportierten Produkte nicht gemäß dem vorbestimmten Format an das Ausrichtbandmodul übergeben werden müssen, weil die genaue Formatausrichtung erst danach mittels des stromabwärts positionierten Ausrichtbandmoduls stattfindet. Demzufolge sind höhere Beschleunigungen für die jeweiligen Pufferbandabschnitte möglich. Selbst wenn die Produkte dadurch geringfügig ihre jeweilige Position ändern sollten, kann die damit zwischenzeitlich eintretende, ggf. unregelmäßige Ausgangsformation im Nachhinein auf dem Ausrichtbandmodul korrigiert werden, um die vorbestimmte Anordnung der Produkte, d.h. das Übergabeformat für den Einlegevorgang herzustellen.

Von Vorteil ist es, wenn die für mehrere Reihen gemäß der vorbestimmten Anordnung bestimmten Produkte jeweils in gleichartigen, in Transportrichtung hintereinander angeordneten Ausgangsformationen vom Pufferbandmodul an das Ausrichtbandmodul übergeben werden. Dadurch können gleich mehrere Reihen hintereinander quer zur Transportrichtung auf dem Ausrichtbandmodul gemäß dem vorbestimmten Format für den Einlegevorgang ausrichtet werden. Das Ausrichtbandmodul kann dabei zusätzlich wirksam als Puffer zum Einsatz kommen, sodass die Produktweitergabe vom Ausrichtbandmodul unabhängiger von einem Betrieb der stromaufwärts positionierten Förderstrecke, insbesondere des Pufferbandmoduls ist.

Gemäß einer Variante ist das stromaufwärts des Pufferbandmoduls angeordnete Verteilerbandmodul derart konfiguriert, dass es die für jeweilige Querreihen vorgesehenen, vom Produktbereitsteller aufgenommenen Produkte jeweils in quer zur Transportrichtung gleichartig angeordneten Ausgangsformationen, beispielsweise in hintereinander ähnlich bogenartig angeordneten Formationen, dem Pufferbandmodul übergibt. Dies kann zu einer kontinuierlichen Produkttransportfolge führen, sodass entlang der Transportstrecke des Pufferbandmoduls kein hoher Steuer- und Regelungsaufwand an den jeweiligen Pufferbandabschnitten betrieben werden muss. Damit ist auch das nachgeordnete Korrigieren jeweiliger Produktpositionen auf dem Ausrichtbandmodul besser durchführbar.

Vorzugsweise umfasst das Ausrichtbandmodul mehrere in Transportrichtung Seite an Seite angeordnete, separat beschleunigbare Ausrichtbänder, wobei die jeweiligen Ausrichtbänder derart beschleunigbar sind, dass die darauf liegenden Produkte zueinander in mindestens einer quer zur Transportrichtung ausgerichteten Reihe gemäß der vorbestimmten Anordnung positionierbar sind. Die nebeneinander angeordneten Ausrichtbänder sind unabhängig voneinander ansteuerbar und können daher in Abhängigkeit der auf dem Ausrichtbandmodul ankommenden Produktausgangsformationen derart bewegt werden, dass die zunächst in der Ausgangsformation vorliegenden Produkte präzise in die gewünschte Formation verstellt werden können, d.h. in mindestens eine zur Transportrichtung ausgelegte Querreihe verstellt werden, in welchem Format sie dann beispielsweise einer direkt im Anschluss positionierten Einlegestation einer Tiefziehverpackungsmaschine zugeführt werden können. Die von den Ausrichtbändern durchgeführte, den Pufferbandabschnitten nachgelagerte, präzise Produktausrichtung lässt sich zuverlässig bis zum nachfolgenden Einlegevorgang beibehalten, weil die präzise angeordneten Produkte nicht mehr mehrere Transportbandabschnitte nach dem Ausrichtbandmodul überqueren müssen. Vorzugsweise entspricht eine Anzahl der nebeneinander positionierten Ausrichtbänder einer Anzahl der in Transportrichtung ausgerichteten Spuren von Produkten innerhalb der vorbestimmten Anordnung. Somit lässt sich ein präzises Format aus Produkten mittels der nebeneinander positionierten Ausrichtbänder herstellen.

Eine Variante sieht vor, dass das Förderbandsystem ein in Transportrichtung hinter dem Ausrichtbandmodul angeordnetes Einlegebandmodul zum Befüllen von für den Einlegevorgang bereitgestellten Verpackungsmulden aufweist. Vorzugsweise umfasst das Einlegebandmodul ein in Transportrichtung einteilig ausgebildetes Transportband. Damit kann vermieden werden, dass die darauf bereits in der gewünschten Formation angekommenen Produkte nochmals verrutschen.

Erfindungsgemäß ist das Ausrichtbandmodul selber als Einlegeband zum Befüllen von für den Einlegevorgang bereitgestellten Verpackungsmulden ausgebildet. Das Ausrichtbandmodul erfüllt dabei eine Doppelfunktion, weil es zunächst die darauf befindlichen Produkte zueinander präzise entsprechend der vorbestimmten Anordnung ausrichtet und im Anschluss daran die Produkte den bereitgestellten Verpackungsmulden übergibt.

Eine verbesserte Ausführungsvariante sieht vor, dass das Förderbandsystem ein Ausscheiderbandmodul umfasst, das dazu konfiguriert ist, diejenigen Produkte und/oder Produktgruppen, die eine vorbestimmte Eigenschaft aufweisen, beispielsweise untergewichtig sind, auszusortieren. Vorzugsweise ist das Ausscheiderbandmodul stromaufwärts des Verteilerbandmoduls zwischen diesem und dem Produktbereitsteller positioniert. Damit lassen sich gleich zu Beginn der Produktförderstrecke nicht sollwertige Produkte aus dem Verkehr ziehen.

Gemäß einer vorteilhaften Variante ist ein Produktausscheider, beispielsweise ein Picker, dem Einlegebandmodul oder dem als Einlegeband konfigurierten Ausrichtbandmodul zugeordnet und dazu bestimmt, einzelne, außerhalb einer vorbestimmten Lagetoleranz, d.h. nicht in der Reihe angeordnete Produkte dem Produktförderstrom zu entnehmen.

Vorzugsweise umfasst das Verteilerbandmodul mehrere in Transportrichtung Seite an Seite angeordnete Verteilerbänder mit zusammenlaufend (d.h. konvergent) oder auseinanderlaufend (d.h. divergierend) ansteuerbaren Transportspuren. Dadurch ist es möglich, eingangs des Verteilerbandmoduls vom Produktbereitsteller, insbesondere von einem Slicer, in Transportrichtung nebeneinander zur Verfügung gestellte geschnittene Produkte, beispielsweise aufgeschnittene einzelne Scheiben Fleisch oder Fisch oder auch gruppierte Scheiben, beispielsweise geschindelt geschnittene Wurst oder Käse, in eng nebeneinander liegenden Spuren aufzunehmen und anschließend entlang der Transportstrecke des Verteilerbandmoduls auseinanderlaufend auf vorbestimmte Spuren zu verteilen, die weiter zueinander beabstandet sind, um daran anschließend dementsprechenden Spuren des Pufferbandmoduls übergeben zu werden, wobei die Spurenanordnung des Pufferbandmoduls entsprechend einer Verpackungsmuldenbereitstellung an der Einlegestation eingestellt ist. Somit kann das Verteilerbandmodul hervorragend als Koppeleinheit zur Überbrückung einer unterschiedlichen Spurenführung, insbesondere zwischen einem Slicer und einem Pufferbandmodul, eingesetzt werden, um die Produkte in vorbestimmte Transportspuren hinsichtlich eines Einlegevorgangs zu bringen.

Die nebeneinander positionierten Verteilerbänder können insbesondere in einer voreingestellten starren auseinanderlaufenden Betriebsanordnung dem Pufferbandmodul vorangestellt positioniert sein. Es wäre jedoch auch vorstellbar, dass die jeweiligen Verteilerbänder eine flexibel ansteuerbare Spurenführung aufweisen, d.h. entsprechend der Produktbereitstellung daran angepasst zueinander ansteuerbar sind. Vorzugsweise sind die jeweiligen Verteilerbänder derart in Transportrichtung beschleunigbar, dass die vom Verteilerbandmodul an das stromabwärts positionierte Pufferbandmodul in gleichartigen, in Transportrichtung hintereinander angeordneten Ausgangsformationen, beispielsweise in ähnlichen Bahnkurven, übergeben werden, sozusagen damit eine Voranordnung einzelner Produkte stattfindet.

Eine zweckgemäße Ausführungsform sieht vor, dass dem Ausrichtbandmodul ein Erfassungssystem zugeordnet ist, das dazu konfiguriert ist, die dem Ausrichtbandmodul für eine quer zur Transportrichtung ausgerichtete Reihe der vorbestimmten Anordnung übergebenen Produkte zu erfassen, wobei das Ausrichtbandmodul dazu ausgebildet ist, basierend auf Messwerten des Erfassungssystems die darauf vorliegenden Produkte in mindestens einer Reihe quer zur Transportrichtung gemäß der vorbestimmten Anordnung zu positionieren. Vorzugsweise handelt es sich bei dem Erfassungssystem um eine Sensoreinheit, die oberhalb des Ausrichtbandmoduls positioniert gelagert ist. Die Sensoreinheit kann eine Sensorschiene mit daran befestigten Sensoren aufweisen, insbesondere Reflexionssensoren oder Lichtschranken für die Erfassung der Vorderkante der Produkte oder bilderfassende Sensoren.

Vorzugsweise ist eine Verpackungsmaschine, weiter vorzugsweise eine Tiefziehverpackungsmaschine, mit einem dem Einlegevorgang vorangestellt ausgebildeten Förderbandsystem der zuvor beschriebenen Art ausgestattet. Vorzugsweise ist das erfindungsgemäße Förderbandsystem als Toploader konfiguriert, in welcher Ausführung es oberhalb einer Muldenherstellungsstrecke am Maschinenrahmen der Tiefziehverpackungsmaschine gelagert ist.

Ferner bezieht sich die Erfindung auf eine Verpackungslinie, umfassend eine Tiefziehverpackungsmaschine mit einem erfindungsgemäßen Förderbandsystem sowie einem der Tiefziehverpackungsmaschine vorangestellt zugeordneten Slicer zum Herstellen geschnittener einzelner und/oder gruppierter Produkte. Vom Slicer aus werden dem Förderbandsystem kontinuierlich geschnittene Produkte übergeben, worauf diese entlang der Transportstrecke zunächst verteilt, dann angesammelt bzw. gepuffert und schließlich für einen präzisen Einlegevorgang entsprechend eines gewünschten Formats ausgerichtet werden. Eine derartige Verpackungslinie garantiert eine hohe Verpackungsqualität.

Die Erfindung betrifft auch ein Verfahren zum Bilden einer vorbestimmten Anordnung aus einzelnen oder in jeweiligen Gruppen zur Verfügung gestellten Produkten, wobei die Produkte gemäß der vorbestimmten Anordnung für einen Einlegevorgang an einer Verpackungsmaschine bestimmt sind, und wobei gemäß der vorbestimmten Anordnung mehrere Produkte in einer Reihe quer zur Transportrichtung ausgerichtet werden. Erfindungsgemäß werden dabei die Produkte in nacheinander folgenden Transportabschnitten wie folgt bewegt:
- entlang eines ersten Transportabschnitts werden die Produkte auf mehrere in Transportrichtung verlaufende, vorbestimmte Spuren verteilt,
- entlang eines zweiten Transportabschnitts werden die jeweiligen für eine quer zur Transportrichtung ausgerichtete Reihe der vorbestimmten Anordnung vorgesehenen Produkte in mehreren vornehmlich gleichartig in Transportrichtung hintereinander angeordneten Ausgangsformationen transportiert, und
- entlang eines dritten Transportabschnitts werden die jeweiligen für eine quer zur Transportrichtung ausgerichtete Reihe der vorbestimmten Anordnung vorgesehenen gemäß der vorgenannten Ausgangsformation vorliegenden Produkte relativ zueinander derart beschleunigt, dass die jeweiligen Produkte in mindestens einer quer zur Transportrichtung ausgerichteten Reihe entsprechend der vorbestimmten Anordnung positioniert werden.

Die erfindungsgemäße Lösung bietet gegenüber der eingangs in der Beschreibungseinleitung beschriebenen bekannten Anordnung erhebliche Vorteile. Die Erfindung schafft die Möglichkeit, einer zweckgemäßen präzisen Übergabe mehrerer Produkte gleichzeitig an einen nachgelagerten Einlegevorgang, sodass insgesamt die Verpackungsqualität erheblich von der Erfindung profitiert. Hinzu kommt, dass das erfindungsgemäße Förderbandsystem in Zusammenarbeit mit taktweise arbeitenden Verpackungsmaschinen, insbesondere Tiefziehverpackungsmaschinen, flexibel anpassbar ist, sozusagen als Allrounder an unterschiedlichen Verpackungsmaschinentypen zum Einsatz kommen kann.

Ausführungsformen der Erfindung werden anhand der folgenden Figuren genauer erläutert. Dabei zeigen:
- Fig. 1: eine schematische Darstellung eines bekannten Förderbandsystems;
- Fig. 2: eine schematische Seitenansicht einer Verpackungslinie mit einer Verpackungsmaschine, die als Tiefziehverpackungsmaschine mit einem daran integrierten Förderbandsystem zum Zuführen von Produkten ausgebildet ist;
- Fig. 3: das erfindungsgemäße Förderbandsystem isoliert in Draufsicht; und
- Fig. 4: eine schematische Darstellung des Produkttransports entlang des erfindungsgemäßen Förderbandsystems.

In den Figuren dargestellte technische Merkmale sind durchgehend mit den gleichen Bezugszeichen versehen.

Figur 1 zeigt ein gemäß der Beschreibungseinleitung beschriebenes bekanntes Förderbandsystem 70, bei welchem in Transportrichtung T` hintereinander ein Verteilerband 71, ein Ausrichtband 72, mehrere Pufferbänder 73 sowie ein Einlegeband 74 angeordnet sind.

Stromaufwärts des Förderbandsystems 70 ist ein Slicer 75 positioniert, der dem Verteilerband 71 kontinuierlich geschnittene Produkte 76 übergibt. Das Verteilerband 71 verteilt die eingangs eng nebeneinander zusammenliegenden Produkte 76 auf mehrere entlang der Transportrichtung T` verlaufende, weiter auseinanderliegende Spuren 77, damit die Produkte 76 entsprechend der Spuren 77 an das stromabwärts positionierte Ausrichtband 72 übergeben werden. Die auf die Spuren 77 verteilten Produkte 76 kommen auf dem Ausrichtband 72 gemäß einer Ausgangsformation A' an. Auf dem Ausrichtband 72 werden die in der Ausgangsformation A' vorliegenden Produkte 76 derart beschleunigt, dass sie gemäß einer gestrichelt dargestellten Querreihe Q', d.h. in einer vorbestimmten Anordnung, auf dem Ausrichtband 72 für den Weitertransport positioniert werden.

Damit bei der in Figur 1 dargestellten Anordnung die von dem Verteilerband 71 bereitgestellten Produkte 76 kontinuierlich dem Ausrichtband 72 zugeführt werden können, muss das Ausrichtband 72 wegen der zügig stattfindenden Produktnachfolge kompakt, d.h. in Transportrichtung T' kurz konfiguriert sein, sodass die damit ausgerichtete Querreihe Q` an Produkten 76 gleicherma-βen zügig weitertransportiert werden kann.

Figur 1 zeigt ferner, dass die gemäß der Querreihe Q` angeordneten Produkte 76 im Anschluss an das Ausrichtband 72 gleich mehrere Pufferbänder 73 hin zum Einlegeband 74 überqueren. Entlang der Pufferbandstrecke müssen die in Querreihen Q` angeordneten Produkte 76 daher mehrere Übergabespalte U` überqueren, die zwischen benachbarten Pufferbandabschnitten sowie zwischen dem in Transportrichtung T` zuletzt angeordneten Pufferband 73 und dem anschließenden Einlegeband 74 vorliegen.

Das gemäß Figur 1 gezeigte bekannte Förderbandsystem 70 hat den technischen Nachteil, dass beim Überqueren der Pufferbänder 73 hin zum Einlegeband 74 die eingangs noch gemäß der Querreihe Q' präzise angeordneten Produkte 76 verrutschen können, sodass im Anschluss an die Pufferbänder 73 für einen Einlegevorgang am Einlegeband 74 nicht mehr die präzise gebildete Querreihe Q` zur Verfügung steht. Die jeweiligen Produkte 76 können dann nicht mehr genau in zur Verfügung gestellte Verpackungsmulden eingelegt werden.

Wie bereits erwähnt, ist das direkt im Anschluss an das Verteilerband 71 angeordnete Ausrichtband 72 konstruktiv kurz ausgebildet, um den kontinuierlichen Produktfluss vom Verteilerband 71 zu verarbeiten. Diesbezüglich ist ferner von Nachteil, dass wegen der relativ kurzen Ausrichtzeiten, welche dem Ausrichtband 72 zur Verfügung stehen, darauf immer nur eine Querreihe Q` von Produkten 76 gebildet werden kann und dafür die einzelnen Ausrichtbänder stark beschleunigt werden müssen, um den nachkommenden Produktfluss vom Verteilerband 71 zu verarbeiten

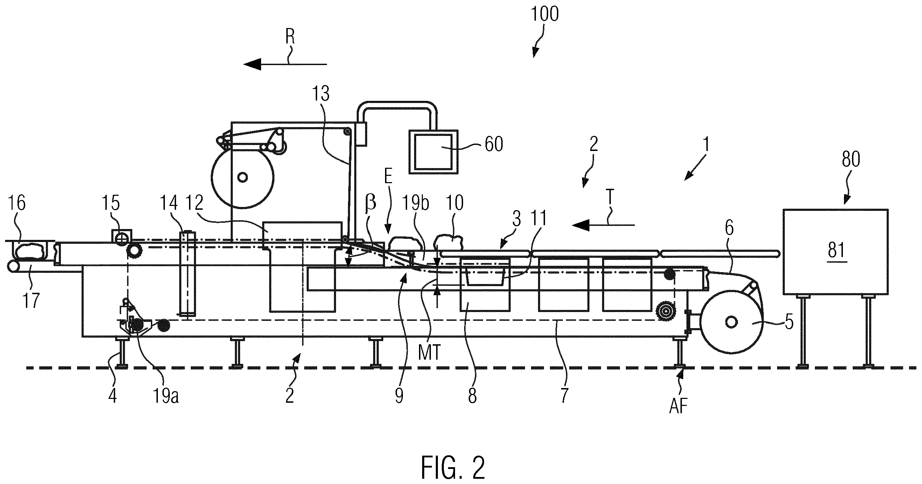

Figur 2 zeigt eine schematische Seitenansicht einer Verpackungslinie 100 mit einer Verpackungsmaschine 1, die als taktweise arbeitende Tiefziehverpackungsmaschine 2 mit einem Förderbandsystem 3 ausgebildet ist. Die Tiefziehverpackungsmaschine 2 umfasst ein Maschinengestell 4, das entlang einer Produktionsrichtung R ausgerichtet ist und eine Aufstellfläche AF an seiner Unterseite aufweist.

Rechts der in Figur 1 gezeigten Tiefziehverpackungsmaschine 2 ist dem Förderbandsystem 3 funktional ein Produktbereitsteller 80 zugeordnet, der hier z.B. als Slicer 81 ausgebildet ist und dem Förderbandsystem 3 kontinuierlich Produkte 10 einzeln oder in jeweiligen Gruppen, beispielsweise in einzelnen Fleischscheiben oder in geschindelt geschnittenen Wurst- oder Käseportionen, in nebeneinander angeordneten Produktspuren übergibt.

Am rechts in der Figur 1 gezeigten Anfang der Tiefziehverpackungsmaschine 2 ist eine Abrollvorrichtung 5 für eine Unterfolie 6 vorgesehen. Die Unterfolie 6 wird mittels zweier seitlich der Unterfolie 6 angeordneten Klammerketten 7 einer Formstation 8 zugeführt, um Verpackungsmulden 11 mit einer vertikalen Muldentiefe MT in die Unterfolie 6 tiefzuziehen. Des Weiteren ist eine schräge bzw. gegenüber einer Horizontalen im Winkel β geneigte Einlegestrecke 9 für einen Einlegevorgang E eines Produkts 10 in geformte Verpackungsmulden 11 in der Produktionsrichtung R auf die Formstation 8 folgend gezeigt.

Im weiteren Produktionsverlauf folgen der Einlegestrecke 9 eine Siegelstation 12 zum Verschlie-βen der mit Produkten 10 gefüllten Verpackungsmulden 11 mit einer Deckelfolie 13 und eine erste Schneidstation 14, die als Querschneidstation ausgeführt ist. Eine zweite Schneidstation 15, die nach der ersten Querschneidstation 14 stromabwärts angeordnet ist, ist als Längsschneidstation ausgeführt und vereinzelt die Verpackungen 16. Über ein Abführband 17 werden die vereinzelten Verpackungen 16 aus der Tiefziehverpackungsmaschine 2 heraustransportiert.

Die Tiefziehverpackungsmaschine 2 weist eine Steuerung 60 auf, die nicht nur einen Antrieb 19a, beispielsweise einen Servomotor, der Klammerketten 7 ansteuern kann, sondern auch einen Antrieb 19b des Förderbandsystems 3 ansteuern kann, um die Geschwindigkeiten beider Antriebe 19a, 19b zueinander synchronisieren oder zueinander anpassen zu können, um den Einlegevorgang optimal entsprechend dem Produkt 10 und/oder der Verpackungsmulde 11 ausführen zu können.

Das in Figur 1 gezeigte Förderbandsystem 3 ist vorzugsweise als mehrspuriges Zuführbandsystem zum Transport von Produkten 10 entlang einer Transportrichtung T ausgebildet. Das Förderbandsystem 3 ist gemäß der Figur 1 als Zuführbandsystem der Tiefziehverpackungsmaschine 2 ausgebildet, es kann jedoch auch als Zuführeinrichtung an anderen Verpackungsmaschinetypen zum Einsatz kommen, beispielsweise als Zuführeinrichtung eines Traysealers.

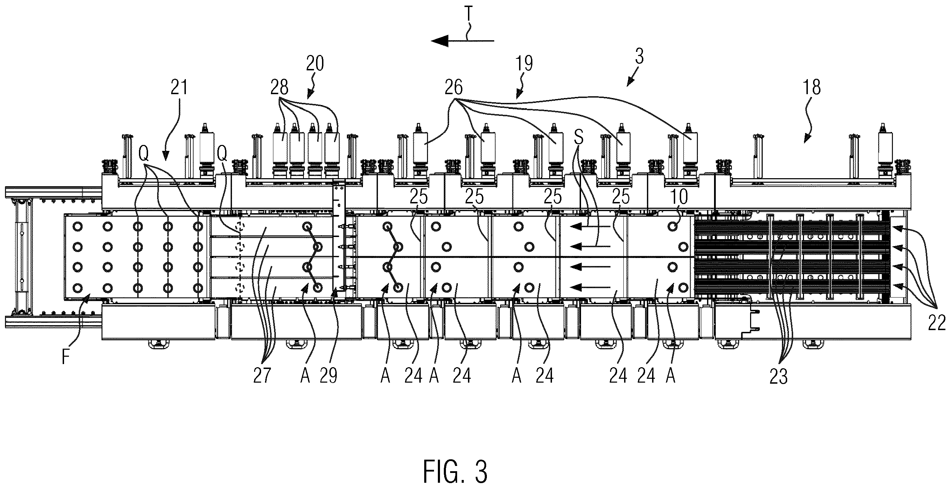

Figur 3 zeigt das Förderbandsystem 3 isoliert in Draufsichtdarstellung. Das Förderbandsystem 3 umfasst in Transportrichtung T hintereinander angeordnet ein Verteilerbandmodul 18, ein stromabwärts des Verteilerbandmoduls 18 angeordnetes Pufferbandmodul 19, ein dem Pufferbandmodul 19 nachgeordnetes Ausrichtbandmodul 20 sowie weiter stromabwärts ein Einlegebandmodul 21.

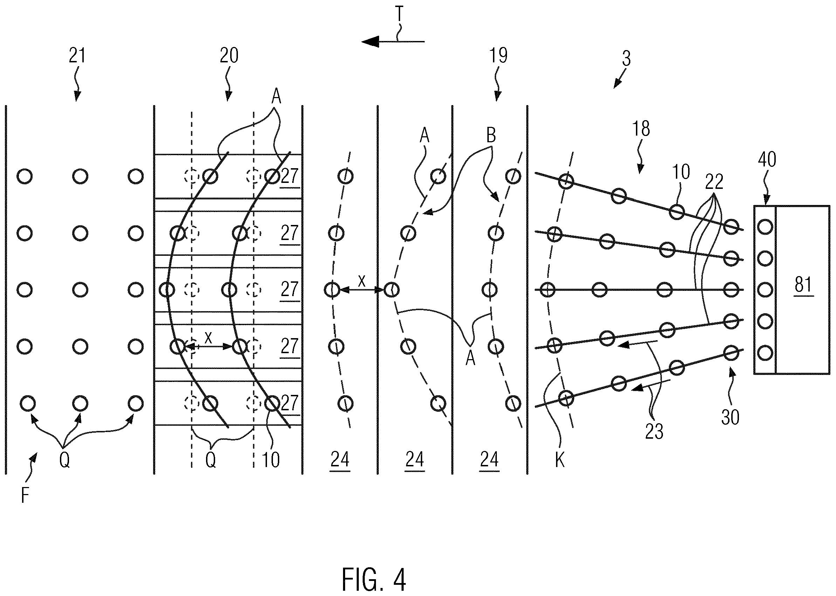

Das Verteilerbandmodul 18 ist dazu konfiguriert, von dem in Figur 2 gezeigten Slicer 81 kontinuierlich Produkte 10 aufzunehmen. Das Verteilerbandmodul 18 umfasst mehrere in Transportrichtung T Seite an Seite angeordnete Verteilerbänder 22, die für den Transport der Produkte 10 insbesondere auseinanderlaufend ansteuerbare Transportspuren 23 aufweisen. Dabei können die vom Slicer 81 aufgenommenen Produkte 10 eingangs der Verteilerbänder 22 enger nebeneinander positioniert vorliegen als am Ausgang der jeweiligen Verteilerbänder 22 (siehe Figur 4), wo sie für die Übergabe an das anschließende Pufferbandmodul 19 auf weiter auseinanderliegende Spuren S platziert sind.

Das Pufferbandmodul 19 umfasst gemäß Figur 3 fünf hintereinander in Transportrichtung T angeordnete Pufferbandabschnitte 24. Zwischen benachbarten Pufferbandabschnitten 24 ist jeweils ein Übergabespalt 25 ausgebildet. Die jeweiligen Pufferbandabschnitte 24 sind jeweils mit einem Antrieb 26 ausgestattet, beispielsweise einem Servomotor. Die jeweiligen Antriebe 26 sind vorzugsweise separat ansteuerbar, sodass sich entlang des Pufferbandmoduls 19 darauf liegende Produkte 10 in einer gewünschten Ausgangsformation A ansammeln lassen, sodass das Pufferbandmodul 19 in gewissem Maße als Vorpositionierer sowie als Speicher einsetzbar ist, aus dem kontinuierlich die Produkte 10 an das stromabwärts positionierte Ausrichtbandmodul 20 weitertransportiert werden können.

Figur 3 zeigt, dass das Ausrichtbandmodul 20 mehrere in Transportrichtung T Seite an Seite angeordnete Ausrichtbänder 27 aufweist. Gemäß Figur 3 sind die Ausrichtbänder 27 separat ansteuerbar und können derart beschleunigt werden, dass die darauf gemäß der Ausgangsformation A aufgenommenen Produkte 10 zueinander in einer vorbestimmten Anordnung F positioniert werden können. Hierfür sind die jeweiligen Ausrichtbänder 27 mit separat ansteuerbaren Antrieben 28, beispielsweise Servomotoren, ausgestattet. Gemäß Figur 3 bildet die vorbestimmte Anordnung F eine Querreihe Q zur Transportrichtung T, entsprechend eines Muldenformats später an der Einlegestrecke 9 zur Verfügung gestellter Verpackungsmulden 11.

Die auf dem Ausrichtbandmodul 20 mittels der Ausrichtbänder 27 zueinander ausgerichteten Produkte 10 können anschließend präzise an das Einlegebandmodul 21 übergeben werden, das die in Querreihen Q angeordneten Produkte 10 Reihe um Reihe der in Figur 2 gezeigten Einlegestrecke 9 zuführt. Demzufolge haben die vom Ausrichtbandmodul 20 aus weitertransportierten, präzise zueinander angeordneten Produkte 10 nur noch eine kurze, nicht mehrere Übergabespalte 25 aufweisende weitere Transportstrecke hin zur Einlegestrecke 9 zu durchlaufen, sodass sie an der Einlegestrecke 9 präzise in Querreihen Q angeordnet ankommen. Hiermit wird insgesamt der Verpackungsprozess genauer, sodass die Qualität der Herstellung verbessert werden kann.

Figur 3 zeigt ferner ein Erfassungssystem 29, welches eingangs dem Ausrichtbandmodul 20 angeordnet ist. Das Erfassungssystem 29 ist dazu konfiguriert, die dem Ausrichtbandmodul 20 zum Bilden einer quer zur Transportrichtung T ausgerichteten Reihe Q übergebenen Produkte 10 zu erfassen, wobei das Ausrichtbandmodul 20 dazu ausgebildet ist, basierend auf Messwerten des Erfassungssystems 29 bezüglich der darunter in einer Ausgangsformation A vorliegenden Produkte 10 in mindestens einer Reihe Q quer zur Transportrichtung T gemäß der vorbestimmten Anordnung F zu positionieren.

In Figur 3 werden auf dem Ausrichtbandmodul 20 eingangs mehrere nebeneinander positionierte Produkte 10 in der Ausgangsformation A gezeigt. Die in der Ausgangsformation A an das Ausrichtbandmodul 20 übergebenen Produkte 10 sind zum Bilden einer quer zur Transportrichtung T ausgerichteten Reihe Q gemäß der vorbestimmten Anordnung F vorgesehen. Eine gestrichelt dargestellte, quer zur Transportrichtung T präzise angeordnete Reihe Q ist am Ende des Ausrichtbandmoduls 20 in Figur 3 gezeigt. In dieser Formation werden die jeweiligen Produkte 10 reihenweise an das anschließende Einlegebandmodul 21 weitertransportiert. Auf dem Einlegebandmodul 21 sind in Transportrichtung T hintereinander mehrere Reihen Q präzise angeordneter Produkte 10 positioniert, die entlang der Einlegestrecke 9 gemäß dem Maschinentakt der Tiefziehverpackungsmaschine 2 den dort zur Verfügung gestellten Verpackungsmulden 11 zugeführt werden.

Anhand Figur 3 wird gezeigt, dass zunächst entlang des Pufferbandmoduls 19 die jeweiligen für eine Reihe Q vorgesehenen Produkte 10 gemäß der in horizontaler Projektionsebene angeordneten Ausgangsformation A transportiert werden, gemäß welcher die jeweiligen Produkte 10 dann auch an das stromabwärts positionierte Ausrichtbandmodul 20 übergeben werden. Erst auf dem dem Pufferbandmodul 19 in Transportrichtung T nachgeordnet positionierten Ausrichtbandmodul 20 werden die Produkte 10 mittels der jeweiligen Ausrichtbänder27 derart beschleunigt, dass sie aus ihrer vorläufigen Ausgangsformation A gemäß der gewünschten quer zur Transportrichtung T ausgerichteten Reihe Q angeordnet werden, in welcher Formation sie dann dem anschließenden Einlegebandmodul 21 übergeben werden.

Das insgesamt entlang der Transportstrecke des Förderbandsystems 3 verspätet, d.h. im Produktförderfluss nach hinten hinausgezögert, durchgeführte Ausrichten der Produkte 10 gemäß der Reihen Q gewährleistet ein präziseres Einlegen der jeweiligen Produkte 10 in die an der Einlegestrecke 9 zur Verfügung gestellten Verpackungsmulden 11. Dies liegt unter anderem daran, dass die mittels des Ausrichtbandmoduls 20 präzise in der Reihe Q ausgerichteten Produkte 10 nicht mehr die Übergabespalte 25 entlang der Transportstrecke des Pufferbandmoduls 19 überqueren müssen.

Figur 4 zeigt in schematischer Darstellung einen Produktfördervorgang mittels des Förderbandsystems 3. Dort kommen zunächst die Produkte 10 vom Slicer 81 in einer relativ schmalen Transportspur 30 nebeneinander angeordnet auf dem Verteilerbandmodul 18 an. Mittels der Verteilerbänder 22 werden die zunächst engspurig vom Slicer 81 aufgenommenen Produkte 10 entlang der auseinanderlaufend ansteuerbaren Spuren 23 hin zum Pufferbandmodul 19 transportiert. Die jeweiligen für eine Reihe Q vorgesehenen Produkte 10 werden an das Pufferbandmodul 18 gemäß der Ausgangsformation A übergeben.

In Figur 4 werden die Produkte 10 vom Slicer 81 entlang der Spuren 23 derart geführt, dass die jeweiligen für eine Reihe Q vorgesehenen Produkte 10 quer zur Transportrichtung T in im Wesentlichen konzentrischen Bahnkurven K hin zum Pufferbandmodul 19 transportiert werden. Entlang des Pufferbandmoduls 19 sind die jeweiligen für eine Reihe Q vorgesehenen Produkte 10 quer zur Transportrichtung T in mehreren hintereinander ausgerichteten Bogenbahnen B als Ausgangsformation A angeordnet. Entlang der Transportstrecke des Pufferbandmoduls 19 können die jeweiligen in Bogenbahnen B hintereinander transportierten Produkte 10 zueinander gemäß einem vorbestimmten Abstand X aufschließen, sodass vor der Übergabe an das Ausrichtbandmodul 20 eine vorbestimmte Voransammlung bzw. -anordnung der jeweiligen Produkte 10 auf dem Pufferbandmodul 19 stattfindet.

Figur 4 zeigt schematisch, dass auf dem Ausrichtbandmodul 20 mehrere Produkte 10 positioniert sind. Die für eine Reihe Q vorgesehenen Produkte 10 sind zunächst gemäß einer Ausgangsformation A, hier in zwei hintereinander positionierten Bogenbahnen B, angeordnet. Die jeweiligen Ausrichtbänder 27 können nun derart unabhängig voneinander beschleunigt werden, dass gleich zwei hintereinander im vorbestimmten Abstand X quer zur Transportrichtung T angeordnete Reihen Q mit darin präzise angeordneten Produkten 10 herstellbar sind.

Ebenfalls könnte auf dem Ausrichtbandmodul 20 auch nur eine Reihe Q von Produkten 10 quer zur Transportrichtung T ausgerichtet werden. Dies wäre dann von Vorteil, wenn die Produkte 10 nicht vom Pufferbandmodul 19 in gleichmäßigen Ausgangsformationen A hintereinander dem Ausrichtbandmodul 20 zur Verfügung gestellt werden. Sofern sich allerdings entlang des Pufferbandmoduls die Produkte 10 in gleichmäßig hintereinander angeordneten Ausgangsformationen A hin zum Ausrichtbandmodul 20 fördern lassen, können auch gleich mehrere Reihen Q auf dem Ausrichtbandmodul 20 hergestellt werden.

Da sich entlang des Pufferbandmoduls 19 die darauf transportierten Produkte 10 ansammeln lassen, bleibt insgesamt dem nachgelagerten Ausrichtbandmodul 20 mehr Zeit dazu, die darauf positionierten Produkte 10 präzise anzuordnen. Daraus resultiert auch die Möglichkeit, dass ein Produktbe- bzw. -nachladevorgang am Slicer 81 besser kompensiert werden kann.

Gemäß Figur 4 ist links neben dem Slicer 81 ein Ausscheiderbandmodul 40 positioniert, das dazu konfiguriert ist, diejenigen Produkte 10 und/oder Produktgruppen, die eine vorbestimmte Eigenschaft aufweisen, beispielsweise nicht sollgewichtig sind, auszusortieren.

Die Erfindung bietet einen verbesserten Transport einzelner oder in jeweiligen Gruppen zur Verfügung gestellter Produkte, um diese präzise an einen nachgeordneten Arbeitsvorgang, beispielsweise einem Einlegevorgang an einer Tiefziehverpackungsmaschine, zu übergeben. Bei der Erfindung findet entlang der Transportstrecke zunächst das Verteilen, anschließend das Puffern bzw. Ansammeln und erst darauffolgend das Ausrichten der jeweiligen Produkte in einer vorbestimmten Anordnung statt, sodass die in einem gewünschten Format ausgerichteten Produkte präzise einem nachgelagerten Einlegevorgang zuführbar sind. Das erfinderische Prinzip lässt sich an unterschiedlichen Verpackungsmaschinentypen problemlos einsetzen und führt insgesamt zu einer verbesserten Verpackungsqualität.

## Patentansprüche

1. Förderbandsystem (3), das zum Bilden einer vorbestimmten Anordnung (F) aus mehreren einzelnen oder in jeweiligen Gruppen ihm zur Verfügung gestellten Produkten (10) konfiguriert ist, wobei die Produkte (10) gemäß der vorbestimmten Anordnung (F) für einen Einlegevorgang (E) an einer Verpackungsmaschine (1) bestimmt sind, und wobei jeweils mehrere Produkte (10) in einer Reihe (Q) quer zur Transportrichtung (T) ausrichtbar sind, wobei das Förderbandsystem (3) umfasst:
- ein Verteilerbandmodul (18), womit Produkte (10) von einem stromaufwärts positionierten Produktbereitsteller (80) aufnehmbar sind,
- ein stromabwärts des Verteilerbandmoduls (18) angeordnetes Pufferbandmodul (19), das dazu konfiguriert ist, in mehreren entlang der Transportrichtung (T) nebeneinander verlaufenden Spuren (S) jeweils mehrere Produkte (10) hintereinander zu transportieren, sowie
- ein Ausrichtbandmodul (20), das dazu ansteuerbar ist, die ihm übergebenen Produkte (10) in mindestens einer Reihe (Q) quer zur Transportrichtung (T) gemäß der vorbestimmten Anordnung (F) zu positionieren, wobei das Ausrichtbandmodul (20) in Transportrichtung (T) weiter stromabwärts positioniert ist als das Pufferbandmodul (19),
**dadurch gekennzeichnet, dass** das Ausrichtbandmodul (20) als Einlegeband zum Befüllen von für den Einlegevorgang (E) bereitgestellten Verpackungsmulden (11) ausgebildet ist.

2. Förderbandsystem nach Anspruch 1, **dadurch gekennzeichnet, dass** das Pufferbandmodul (19) mehrere in Transportrichtung (T) hintereinander angeordnete, separat ansteuerbare Pufferbandabschnitte (24) aufweist, wobei benachbarte Pufferbandabschnitte (24) durch einen Übergabespalt (25) voneinander getrennt sind.

3. Förderbandsystem nach Anspruch 1 oder 2, **dadurch gekennzeichnet, dass** die für eine Reihe (Q) gemäß der vorbestimmten Anordnung (F) bestimmten Produkte (10) zunächst gemäß einer in horizontaler Projektionsebene angeordneten Ausgangsformation (A) vom Pufferbandmodul (19) an das Ausrichtbandmodul (20) übergeben sind.

4. Förderbandsystem nach einem der vorangehenden Ansprüche, **dadurch gekennzeichnet, dass** die für jeweilige Reihen (Q) gemäß der vorbestimmten Anordnung (A) bestimmten Produkte (10) jeweils in gleichartigen in Transportrichtung (T) hintereinander angeordneten Ausgangsformationen (A) vom Pufferbandmodul (19) an das Ausrichtbandmodul (20) übergeben sind.

5. Förderbandsystem nach einem der vorangehenden Ansprüche, **dadurch gekennzeichnet, dass** das Ausrichtbandmodul (20) mehrere in Transportrichtung (T) Seite an Seite angeordnete, separat beschleunigbare Ausrichtbänder (27) aufweist, wobei die jeweiligen Ausrichtbänder (27) derart beschleunigbar sind, dass die darauf liegenden Produkte (10) zueinander in mindestens einer quer zur Transportrichtung (T) ausgerichteten Reihe (Q) gemäß der vorbestimmten Anordnung (F) positionierbar sind.

6. Förderbandsystem nach Anspruch 4 oder 5, **dadurch gekennzeichnet, dass** eine Anzahl der nebeneinander positionierten Ausrichtbänder (27) einer Anzahl der in Transportrichtung ausgerichteten Spuren (S) von Produkten (10) innerhalb der vorbestimmten Anordnung (F) entspricht.

7. Förderbandsystem nach einem der vorangehenden Ansprüche, **dadurch gekennzeichnet, dass** das Förderbandsystem (3) ein in Transportrichtung (T) hinter dem Ausrichtbandmodul (20) angeordnetes Einlegebandmodul (21) zum Befüllen von für den Einlegevorgang (E) bereitgestellten Verpackungsmulden (11) aufweist.

8. Förderbandsystem nach einem der vorangehenden Ansprüche, **dadurch gekennzeichnet, dass** das Verteilerbandmodul (18) mehrere in Transportrichtung (T) Seite an Seite angeordnete Verteilerbänder (22) mit auseinanderlaufend ansteuerbaren Transportspuren (23) aufweist.

9. Förderbandsystem nach einem der vorangehenden Ansprüche, **dadurch gekennzeichnet, dass** das Förderbandsystem (3) ein Ausscheiderbandmodul (40) umfasst, das dazu konfiguriert ist, diejenigen Produkte (10) und/oder Produktgruppen, die eine vorbestimmte Eigenschaft aufweisen, auszusortieren.

10. Förderbandsystem nach einem der vorangehenden Ansprüche, **dadurch gekennzeichnet, dass** dem Ausrichtbandmodul (20) ein Erfassungssystem (29) zugeordnet ist, das dazu konfiguriert ist, die dem Ausrichtbandmodul (20) zum Bilden einer quer zur Transportrichtung (T) ausgerichteten Reihe (Q) übergebenen Produkte (10) zu erfassen, wobei das Ausrichtbandmodul (20) dazu ausgebildet ist, basierend auf Messwerten des Erfassungssystems (29) die darauf in einer Ausgangsformation (A) vorliegenden Produkte (10) in mindestens einer Reihe (Q) quer zur Transportrichtung gemäß der vorbestimmten Anordnung (F) zu positionieren.

11. Verpackungsmaschine (1), insbesondere eine Tiefziehverpackungsmaschine (2), mit einem dem Einlegevorgang (E) vorangestellt ausgebildeten Förderbandsystem (3) gemäß einem der vorangehenden Ansprüche.

12. Verpackungslinie (100), umfassend eine Tiefziehverpackungsmaschine (2) mit einem Förderbandsystem (3) gemäß einem der Ansprüche 1 bis 11 sowie einem der Tiefziehverpackungsmaschine (2) zugeordneten Slicer (81) zum Herstellen geschnittener einzelner und/oder gruppierter Produkte (10).

13. Verfahren zum Bilden einer vorbestimmten Anordnung (F) aus einzelnen oder in jeweiligen Gruppen zur Verfügung gestellten Produkten (10), wobei die Produkte (10) gemäß der vorbestimmten Anordnung (F) für einen Einlegevorgang (E) an einer Verpackungsmaschine (1) bestimmt sind, wobei gemäß der vorbestimmten Anordnung (F) mehrere Produkte (10) in einer Reihe (Q) quer zur Transportrichtung (T) ausgerichtet werden, dabei werden die Produkte (10) in nacheinander folgenden Transportabschnitten wie folgt bewegt:
- entlang eines ersten Transportabschnitts werden die Produkte (10) auf mehrere in Transportrichtung (T) verlaufende, vorbestimmte Spuren verteilt,
- entlang eines zweiten Transportabschnitts werden die jeweiligen für eine quer zur Transportrichtung (T) ausgerichtete Reihe (Q) der vorbestimmten Anordnung (F) vorgesehenen Produkte (10) in mehreren vornehmlich gleichartig in Transportrichtung hintereinander angeordneten Ausgangsformationen (A) transportiert,
- entlang eines dritten Transportabschnitts werden die jeweiligen für eine quer zur Transportrichtung (T) ausgerichtete Reihe (Q) der vorbestimmten Anordnung (F) vorgesehenen gemäß der vorgenannten Ausgangsformation (A) vorliegenden Produkte (10) relativ zueinander derart beschleunigt, dass die jeweiligen Produkte (10) in mindestens einer quer zur Transportrichtung (T) ausgerichteten Reihe (Q) entsprechend der vorbestimmten Anordnung (F) positioniert werden, und Befüllen von für den Einlegevorgang (E) bereitgestellten Verpackungsmulden (11) mit den in der Reihe (Q) positionierten Produkten (10) anhand des dritten Transportabschnitts.

## Claims

1. A conveyor belt system (3) configured for forming a predetermined arrangement (F) from a plurality of products (10) provided thereto individually or in respective groups, wherein the products (10) according to the predetermined arrangement (F) are intended for an infeed process (E) on a packaging machine (1), and wherein a plurality of products (10) at a time can be oriented in a row (Q) transversely to the conveying direction (T), the conveyor belt system (3) comprising:
- a distributing belt module (18) by means of which products (10) can be taken up from an upstream positioned product provider (80),
- a buffer belt module (19) arranged downstream of the distributing belt module (18) and configured to convey in a plurality of tracks (S) extending side by side along the conveying direction (T) a respective plurality of products (10) one after the other, and
- an orienting belt module (20) controllable such that it will position the products (10), which have been transferred thereto, in at least one row (Q) transversely to the conveying direction (T) according to the predetermined arrangement (F), wherein the orienting belt module (20) is positioned further downstream than the buffer belt module (19), when seen in the conveying direction (T),
**characterized in that** the orienting belt module (20) is configured as an infeed belt for filling packaging troughs (11) provided for the infeed process (E).

2. The conveyor belt system according to claim 1, **characterized in that** the buffer belt module (19) comprises a plurality of separately controllable buffer belt sections (24) arranged one after the other in the conveying direction (T), wherein neighboring buffer belt sections (24) are separated from one another by a transfer gap (25).

3. The conveyor belt system according to claim 1 or 2, **characterized in that** the products (10) intended for a row (Q) according to the predetermined arrangement (F) are first transferred from the buffer belt module (19) to the orienting belt module (20) according to an initial formation (A) arranged in a horizontal plane of projection.

4. The conveyor belt system according to one of the preceding claims, **characterized in that** the products (10) intended for respective rows (Q) according to the predetermined arrangement (F) are transferred from the buffer belt module (19) to the orienting belt module (20) in respective initial formations (A) which are arranged in a similar manner one after the other.

5. The conveyor belt system according to one of the preceding claims, **characterized in that** the orienting belt module (20) comprises a plurality of separately accelerable orienting belts (27) arranged side by side in the conveying direction (T), the respective orienting belts (27) being accelerable such that the products (10) placed thereon are positionable relative to one another in at least one row (Q) oriented transversely to the conveying direction (T) according to the predetermined arrangement (F).

6. The conveyor belt system according to claim 4 or 5, **characterized in that** a number of the orienting belts (27) positioned side by side corresponds to a number of the tracks (S) of products (10) oriented in the conveying direction within the predetermined arrangement (F).

7. The conveyor belt system according to one of the preceding claims, **characterized in that** the conveyor belt system (3) comprises an infeed belt module (21) arranged downstream of the orienting belt module (20) in the conveying direction (T) and used for filling packaging troughs (11) provided for the infeed process (E).

8. The conveyor belt system according to one of the preceding claims, **characterized in that** the distributing belt module (18) comprises a plurality of distributing belts (22) arranged side by side in the conveying direction (T) and having conveying tracks (23) which are controllable such that they diverge.

9. The conveyor belt system according to one of the preceding claims, **characterized in that** the conveyor belt system (3) comprises a discarding belt module (40) configured for discarding the products (10) and/or groups of products (10) which have a predetermined property.

10. The conveyor belt system according to one of the preceding claims, **characterized in that** the orienting belt module (20) has associated therewith a detection system (29), which is configured for detecting the products (10) transferred to the orienting belt module (20) for forming a row (Q) oriented transversely to the conveying direction (T), wherein the orienting belt module (20) is configured for positioning, based on values measured by the detection system (29), the products (10), which are located thereon in an initial formation (A), in at least one row (Q) transversely to the conveying direction according to the predetermined arrangement (F).

11. A packaging machine (1), in particular a thermoform packaging machine (2), comprising a conveyor belt system (3), which is configured such that it precedes the infeed process (E), according to one of the preceding claims.

12. A packaging line (100), comprising a thermoform packaging machine (2) with a conveyor belt system (3) according to one of the claims 1 to 11 as well as a slicer (81) associated with the thermoform packaging machine (2) and used for producing sliced individual and/or grouped products (10).

13. A method of forming a predetermined arrangement (F) from products (10) provided individually or in groups, wherein the products (10) according to the predetermined arrangement (F) are intended for an infeed process (E) on a packaging machine (1), wherein, according to the predetermined arrangement (F), a plurality of products (10) is oriented in a row (Q) transversely to the conveying direction (T), the products (10) being, in the course of this process, moved as follows in successive conveying sections:
- along a first conveying section, the products (10) are distributed to a plurality of predetermined tracks extending in the conveying direction (T),
- along a second conveying section, the respective products (10) intended for a row (Q), which is oriented transversely to the conveying direction (T) and which constitutes part of the predetermined arrangement (F), are conveyed in a plurality of initial formations (A) that are preferably arranged in a similar manner one after the other in the conveying direction, and
- along a third conveying section, the respective products (10) intended for a row (Q), which is oriented transversely to the conveying direction (T) and which constitutes part of the predetermined arrangement (F), and provided according to the above-mentioned initial formation (A) are accelerated relative to one another in such a way that the respective products (10) are positioned in at least one row (Q) according to the predetermined arrangement (F), the row (Q) being oriented transversely to the conveying direction (T), and filling packaging troughs (11) provided for the infeed process (E) with the products (10) positioned in said row (Q) by means of the third conveying section.

## Revendications

1. Système de bande transporteuse (3) configuré pour former un arrangement prédéterminé (F) à partir de plusieurs produits (10) individuels ou mis à sa disposition dans des groupes respectifs, dans lequel les produits (10), selon l'arrangement prédéterminé (F), sont destinés à une opération d'insertion (E) sur une machine d'emballage (1), et dans lequel plusieurs produits (10) peuvent être alignés dans une rangée (Q) transversalement à la direction de transport (T), dans lequel le système de bande transporteuse (3) comprend :
- un module de bande de distribution (18), grâce auquel des produits (10) peuvent être reçus par un dispositif de mise à disposition de produits (80) positionné en amont,
- un module de bande tampon (19) disposé en aval du module de bande de distribution (18), qui est configuré pour transporter successivement plusieurs produits (10) dans plusieurs pistes (S) s'étendant côte à côte le long de la direction de transport (T), et
- un module de bande d'alignement (20) qui peut être commandé pour positionner les produits (10) qui lui sont remis dans au moins une rangée (Q) transversalement à la direction de transport (T) selon l'arrangement prédéterminé (F), le module de bande d'alignement (20) étant positionné dans la direction de transport (T) plus en aval que le module de bande tampon (19),
**caractérisé en ce que** le module de bande d'alignement (20) est réalisé sous la forme d'une bande d'insertion destinée au remplissage de creux d'emballage (11) prévus pour le processus d'insertion (E).

2. Système de bande transporteuse selon la revendication 1, **caractérisé en ce que** le module de bande tampon (19) présente plusieurs sections de bande tampon (24) agencées les unes derrière les autres dans la direction de transport (T) et pouvant être commandées séparément, des sections de bande tampon voisines (24) étant séparées les unes des autres par une fente de transfert (25).

3. Système de bande transporteuse selon la revendication 1 ou 2, **caractérisé en ce que** les produits (10) destinés à une rangée (Q) selon l'agencement prédéterminé (F) sont d'abord transférés du module de bande tampon (19) au module de bande d'alignement (20) selon une formation de sortie (A) agencée dans le plan de projection horizontal.

4. Système de bande transporteuse selon l'une quelconque des revendications précédentes, **caractérisé en ce que** les produits (10) destinés aux rangées respectives (Q) selon l'agencement prédéterminé (A) sont respectivement transmis du module de bande tampon (19) au module de bande d'alignement (20) dans des formations de sortie (A) agencées les unes derrière les autres de manière similaire dans la direction de transport (T).

5. Système de bande transporteuse selon l'une quelconque des revendications précédentes, **caractérisé en ce que** le module de bande d'alignement (20) présente plusieurs bandes d'alignement (27) agencées côte à côte dans la direction de transport (T) et pouvant être accélérées séparément, les bandes d'alignement respectives (27) pouvant être accélérées de telle manière que les produits (10) situés sur celles-ci peuvent être positionnés les uns par rapport aux autres dans au moins une rangée (Q) orientée transversalement par rapport à la direction de transport (T) selon l'agencement prédéterminé (F).

6. Système de bande transporteuse selon la revendication 4 ou 5, **caractérisé en ce qu'**un certain nombre des bandes d'alignement (27) positionnées les unes à côté des autres correspondent à un certain nombre de pistes (S) de produits (10) orientées dans la direction de transport à l'intérieur de l'agencement prédéterminé (F).

7. Système de bande transporteuse selon l'une quelconque des revendications précédentes, **caractérisé en ce que** le système de bande transporteuse (3) présente un module de bande d'insertion (21) agencé derrière le module de bande d'alignement (20) dans la direction de transport (T) pour le remplissage de creux d'emballage (11) prévus pour le processus d'insertion (E).

8. Système de bande transporteuse selon l'une quelconque des revendications précédentes, **caractérisé en ce que** le module de bande de distribution (18) présente plusieurs bandes de distribution (22) agencées côte à côte dans la direction de transport (T), avec des pistes de transport (23) pouvant être commandées de manière divergente.

9. Système de bande transporteuse selon l'une quelconque des revendications précédentes, **caractérisé en ce que** le système de bande transporteuse (3) comprend un module de bande de séparation (40) qui est configuré pour trier les produits (10) et/ou groupes de produits qui présentent une propriété prédéterminée.

10. Système de bande transporteuse selon l'une quelconque des revendications précédentes, **caractérisé en ce qu'**un système de détection (29) est associé au module de bande d'alignement (20), qui est configuré pour détecter les produits (10) transmis au module de bande d'alignement (20) pour former une rangée (Q) orientée transversalement par rapport à la direction de transport (T), dans lequel le module de bande d'alignement (20) est conçu pour positionner les produits (10), qui se trouvent dans une formation de sortie (A), dans au moins une rangée (Q) transversalement par rapport à la direction de transport selon l'agencement prédéterminé (F) sur la base de valeurs mesurées du système de détection (29).

11. Machine d'emballage (1), en particulier une machine d'emballage à emboutissage profond (2), avec un système de bande transporteuse (3) selon l'une quelconque des revendications précédentes formé en amont de l'opération d'insertion (E).

12. Ligne d'emballage (100) comprenant une machine d'emballage par emboutissage profond (2) avec un système de bande transporteuse (3) selon l'une quelconque des revendications 1 à 11 et une trancheuse (81) associée à la machine d'emballage par emboutissage profond (2) pour la fabrication de produits individuels et/ou groupés (10) coupés.

13. Procédé de formation d'un arrangement prédéterminé (F) à partir de produits individuels ou de produits (10) fournis dans des groupes respectifs, dans lequel les produits (10) sont destinés, selon l'arrangement prédéterminé (F), à une opération d'insertion (E) sur une machine d'emballage (1), dans lequel, selon l'arrangement prédéterminé (F), plusieurs produits (10) sont alignés dans une rangée (Q) transversalement à la direction de transport (T), dans lequel les produits (10) sont déplacés dans des sections de transport successives de la manière suivante :
- le long d'une première section de transport, les produits (10) sont répartis sur plusieurs pistes prédéterminées s'étendant dans la direction de transport (T),
- le long d'une deuxième section de transport, les produits respectifs (10) prévus pour une rangée (Q) de l'arrangement prédéterminé (F) orientée transversalement à la direction de transport (T) sont transportés dans plusieurs formations de sortie (A) agencées les unes derrière les autres, principalement de manière identique dans la direction de transport,
- le long d'une troisième section de transport, les produits (10) respectifs prévus pour une rangée (Q), orientée transversalement par rapport à la direction de transport (T), de l'arrangement prédéterminé (F) selon la formation initiale (A) précitée sont accélérés les uns par rapport aux autres de telle sorte que les produits (10) respectifs sont positionnés dans au moins une rangée (Q), orientée transversalement par rapport à la direction de transport (T), conformément à l'arrangement prédéterminé (F), et des creux d'emballage (11) prévus pour le processus d'insertion (E) sont remplis avec les produits (10) positionnés dans la rangée (Q) au moyen de la troisième section de transport.
